Europäisches Patentamt

European Patent Office

Office européen des brevets

(19)

(11) Veröffentlichungsnummer: **0 009 730**
**B1**

(12) **EUROPÄISCHE PATENTSCHRIFT**

(45) Veröffentlichungstag der Patentschrift :
03.02.82

(21) Anmeldenummer : 79103569.4

(22) Anmeldetag : 21.09.79

(51) Int. Cl.³ : **C 01 B 17/58, C 01 B 17/92,
F 23 G 7/04**

(54) Verfahren zur Aufarbeitung von Abfallsäuren.

(30) Priorität : 03.10.78 DE 2843042

(43) Veröffentlichungstag der Anmeldung :
16.04.80 (Patentblatt 80/08)

(45) Bekanntmachung des Hinweises auf die Patenterteilung : 03.02.82 Patentblatt 82/05

(84) Benannte Vertragsstaaten :
BE CH DE FR GB IT NL SE

(56) Entgegenhaltungen :
DE - A1 - 2 432 250
DE - A1 - 2 440 743
DE - A1 - 2 632 954
DE - B - 2 037 619
DE - C - 627 327

(73) Patentinhaber : BAYER AG
Zentralbereich Patente, Marken und Lizenzen
D-5090 Leverkusen 1, Bayerwerk (DE)

(72) Erfinder : Alberti, Klaus, Dr.
Carl-Rumpff-Strasse 23
D-5090 Leverkusen 1 (DE)
Erfinder : Fabian, Horst W., Dr.
Zum Hahnenberg 40
D-5068 Odenthal-Gloebusch (DE)
Erfinder : Grosche, Michael, Dr.
Carl-Duisberg-Strasse 316
D-5090 Leverkusen 1 (DE)
Erfinder : Guth, Hans, Dr.
Ewald-Röll-Strasse 34
D-5090 Leverkusen 31 (DE)
Erfinder : Holtschmidt, Norbert, Dr.
Zum Hahnenberg 20
D-5068 Odenthal-Gloebusch (DE)
Erfinder : Moldenhauer, Wolfgang, Dr.
Raiffeisenstrasse 27
D-5067 Kuerten (DE)

Imprimerie Jouve, 18, rue St-Denis, 75001 Paris, France

EP 0 009 730 B1

Verfahren zur Aufarbeitung von Abfallsäuren

Die vorliegende Erfindung betrifft ein Verfahren zur Aufarbeitung von Abfallsäuren, die organische Substanzen und anorganische Salze in einer Konzentration bis zur Fließgrenze enthalten, bei dem die Abfallsäuren in eine Brennkammer, deren Wände gekühlt sind und auf denen eine stationäre, dynamische Salzschicht eingestellt wird, eingesprüht und zumindest die organischen Verbindungen oxidiert bzw. gecrackt werden.

Bei den verschiedensten Verfahren fallen Abfallsäuren, die neben anorganischen Salzen auch organische Bestandteile enthalten, an. Bei den bekannten Verfahren zur Aufarbeitung von Abfallsäuren, speziell von Abfallschwefelsäuren, z.B. dem Pauling-Verfahren, kann nur ein geringer Salzgehalt toleriert werden. Deshalb können solche Säuren nur unter erheblichen Aufwendungen.

Mit dem vorliegenden Verfahren können jedoch Abfallsäuren, die anorganische Salze in einer Konzentration bis zur Fließgrenze enthalten, wieder aufgearbeitet werden.

Nach der DE-A-2 440 743 ist bereits ein Verbrennungsverfahren zum Unschädlichmachen von Abwässern bekannt. Bei diesem bekannten Verfahren werden Abwässer, welche organische und schwer schmelzbare mineralische Beimengungen enthalten, im zerstäubten Zustand in den Reaktor eingeführt, die organischen Beimengungen verbrannt und die schwer schmelzbaren mineralischen Beimengungen und Verbrennungsprodukte aus dem Reaktor abgeführt.

Gegenstand der vorliegenden Erfindung ist daher ein Verfahren zur Aufarbeitung von organische Bestandteile enthaltenden Abfallsäuren, die anorganische Salze in einer Konzentration bis zur Fließgrenze enthalten, durch Verbrennung bzw. Crackung in Gegenwart eines sauerstoffhaltigen Gases, welches dadurch gekennzeichnet ist, daß die Abfallsäuren in einer solchen Weise in eine an den Wänden gekühlte Brennkammer fein versprüht und unter direktem Kontakt mit Heißgas verdampft werden, daß zumindest ein Teil der Salze auf den gekühlten Brennkammerwänden eine stationäre dynamische Schicht bildet, die z.T. schmelzflüssig am Brennkammerfuß abgezogen wird, und die Gase anschließend gereinigt und gewaschen werden.

Mit dem vorliegenden Verfahren können Einzelsäuren und Säuregemische aufgearbeitet werden, vorzugsweise werden Abfallsalz- und Abfallschwefelsäure aufgearbeitet. Hierzu wird die aufzuarbeitende Säure gegebenenfalls nach einer Vorkonzentrierung in eine Brennkammer eingedüst und dort mit einem Heißgasstrom unter Sauerstoffzufuhr in direkten Kontakt gebracht. Das Heißgas wird z.B. durch Verbrennung von Öl, Gas oder anderen Energieträgern, z.B. Schwefel oder auch durch Wärmeaustausch erzeugt. Heizmedium und Abfallsäuren können z.B. getrennt über Einstoffbrenner oder gemeinsam über Mehrstoffbrenner eingebracht werden. Die

Brennkammertemperaturen liegen über 700 °C, vorzugsweise über 900 °C, ggf. auch über 1 000 °C. Bei diesen Temperaturen werden die in der Säure enthaltenen organischen Bestandteile in Gegenwart von Sauerstoff, also Luftsauerstoff, reinem Sauerstoff oder Gemischen von diesen, verbrannt bzw. gecrackt.

Durch die hohe Brennkammertemperatur verdampfen sowohl die Säuren als auch das Wasser. Schwefelsäure z.B. wird bei diesen Temperaturen quantitativ in ihre Bestandteile, Wasser, $SO_3$ und hauptsächlich $SO_2$ aufgespalten.

Die Brennkammer ist vorzugsweise ausgemauert, kann jedoch z.B. auch aus Wärmetauscherrohren bestehen. Überraschenderweise ist es bei der vorliegenden Erfindung nicht nötig, die Brennkammer auszumauern, z.B. tritt auch bei langem Beitrieb mit Stahl keine gravierende Korrosion ein. Vorteilhafterweise können deshalb mit dem vorliegenden Verfahren auch solche Säuren, die Salze der ersten drei Hauptgruppen des Periodensystems der chemischen Elemente, also auch Alkali- und Erdalkalisalze, enthalten, aufgearbeitet werden. Besonders vorteilhaft ist, daß auch borhaltige Säuren aufgearbeitet werden können, ohne daß die Brennkammerwandung oder auch eine evtl. Ausmauerung bedeutend angegriffen wird.

Erfindungsgemäß ist jedoch wichtig, daß die Brennkammerwände eine Kühleinrichtung aufweisen. Das erfindungsgemäße Verfahren wird so durchgeführt, daß sich auf den Wänden der Brennkammer aus den in der Säure enthaltenen anorganischen bzw. organischen Bestandteilen eine stationäre dynamische Schicht bildet. Dies bedeutet, daß die Schicht im zeitlichen Mittel immer vorhanden, jedoch abfließend bzw. absublimierend ist, d.h. die abfließende Schicht wird durch die erneute Zuführung der anorganischen Bestandteile ständig nachgebildet.

Den bei der Verbrennung entstandenen Rauchgasen kann in einem nachgeschalteten Wärmetauscher bzw. Abhitzekessel die fühlbare Wärme entzogen und in Dampf umgewandelt werden. Die den Kessel verlassenden Rauchgase werden z.B. durch Eindüsung von Wasser zusätzlich abgekühlt und anschließend gewaschen. Bei dieser Wäsche werden die Stäube und teilweise auch sauren Gase ausgewaschen. Wird das vorliegende Verfahren z.B. zur Aufarbeitung von Schwefel- bzw. Salzsäure eingesetzt, so kann die an dieser Stelle anfallende verunreinigte technische Säure entweder direkt weiterverwendet, z.B. für Neutralisationszwecke oder auch destillativ auf reine Säure weiter aufgearbeitet werden.

Je nach Bedarf können die Gase durch einen naß betriebenen Elektrofilter von Feinstäuben und Aerosolen, z.B. $SO_3$-Aerosolen, gereinigt werden. Das die elektrische Gasreinigungsanlage (EGR) verlassende, gereinigte Rauchgas, das bei der Aufarbeitung von Abfallschwefelsäuren einen hohen $SO_2$-Gehalt besitzt, kann jetzt einer Wiederverwertung, z.B. einer Schwefelsäureproduktion, zugeführt werden. Andererseits können
jedoch auch in einer nachgeschalteten alkalischen Waschstufe die sauren Gase entfernt und
das gereinigte Endgas abgegeben werden. Die
Waschwässer der alkalischen Waschstufe bedürfen in einem solchen Fall einer Nachbehandlung.

Die fühlbare Wärme der Rauchgase wird z.B.
zur Dampferzeugung und/oder zum Aufkonzentrieren der aufzuarbeitenden Abfall- und/oder
Wachssäuren verwendet. Vorzugsweise wird
hierzu der im Abhitzekessel erzeugte
Wasserdampf eingesetzt.

Das erfindungsgemäße Verfahren soll durch
die folgenden Beispiele noch näher erläutert
werden.

Beispiel 1

Eine 60 %ige Abfallschwefelsäure mit ca.
25 Gew.-% Na$_2$SO$_4$ und ca. 3 Gew.-% gelösten
Organika wurde in einem emaillierten Behälter
bei 80 °C zwischengelagert.

Die Förderung der Säure zum Brenner geschah
mittels einer Pumpe über Rohrleitungen aus säurefestem Material.

Die Verbrennung erfolgte mit Öl bei Temperaturen von > 1 000 °C und einem Luftüberschuß von
ca. 30 %, wobei die Abwassermenge ein vielfaches
der angewendeten Ölmenge betrug.

Der Ausbrand der Organika lag bei > 99 %. Die
Schwefelsäure wurde in ihre Bestandteile H$_2$O,
SO$_2$ und SO$_3$ aufgespalten. Die im Rauchgas
enthaltenen Schwefeloxide wurden ausgewaschen und einer Weiterverarbeitung zugeführt.

Die eingebrachten Anorganika wurden teilweise am Kesselboden schmelzflüssig abgezogen,
teilweise als Staub im Rauchgas ausgetragen.
Der anorganische Staub im Rauchgas wurde in
einem Elektrofilter abgeschieden.

Beispiel 2 (Vergleichsbeispiel)

Zum Einsatz gelangte eine stark organisch
belastete Abfallsäure (ca. 4 Gew.-% gelöste Organika) mit ca. 220 g SO$_4^{2-}$/l und ca. 15 g Cl$^-$/l ; der
Gehalt an Anorganika lag bei 3 Gew.-%.

Die Säure wurde analog Bsp. 1 verbrannt, wobei der Ausbrand der Organika ebenfalls bei
> 99 % lag.

Die bei der Verbrennung entstandenen Säuren
und Säureanhydride wurden mit dem Rauchgas
ausgetragen, ausgewaschen und anschließend
einer Weiterverarbeitung zugeleitet.

Die eingebrachten Anorganika wurden als
Staub im Rauchgas ausgetragen und in einem
Elektrofilter abgeschieden.

Beispiel 3

Zum Unterschied zu Bsp. 2 enthielt die angewendete Abfallsäure ca. 20 % Anorganika.

Verbrennung und Rauchgasaufbereitung erfolgte wie in Beispielen 1 und 2.

Die eingebrachten Anorganika wurden weitgehend schmelzflüssig am Kesselboden abgezogen
und teilweise als Staub im Rauchgas ausgetragen
und in einem Elektrofilter abgeschieden.

Ansprüche

1. Verfahren zur Aufarbeitung von organische
Bestandteile enthaltenden Abfallsäuren, die anorganische Salze in einer Konzentration bis zur
Fließgrenze enthalten, durch Verbrennung bzw.
Crackung in Gegenwart eines sauerstoffhaltigen
Gases, dadurch gekennzeichnet, daß die Abfallsäuren in einer solchen Weise in eine an den
Wänden gekühlte Brennkammer fein versprüht
und unter direktem Kontakt mit Verbrennungsgas
verdampft werden, daß zumindest ein Teil der
Salze auf den gekühlten Brennkammerwänden
eine stationäre dynamische Schicht bildet, die
z.T. schmelzflüssig am Brennkammerfuß abgezogen wird, und die Gase anschließend gereinigt
und gewaschen werden.

2. Verfahren nach Anspruch 1, dadurch gekennzeichnet, daß die bei der Verbrennung entstehenden Rauchgase einem Wärmetauscher
bzw. Abhitzekessel zugeführt werden und die
fühlbare Wärme in Dampf umgewandelt wird, der
zum Aufkonzentrieren der aufzuarbeitenden Abfall- und/oder Waschsäuren eingesetzt wird.

3. Verfahren nach Anspruch 1 oder 2, dadurch
gekennzeichnet, daß alkali- und/oder erdalkalihaltige Säuren aufgearbeitet werden.

4. Verfahren nach einem oder mehreren der
Ansprüche 1 bis 3, dadurch gekennzeichnet, daß
verunreinigte Salz- und/oder Schwefelsäure zu
reiner Säure aufgearbeitet werden.

5. Verfahren nach einem oder mehreren der
Ansprüche 1 bis 4, dadurch gekennzeichnet, daß
borhaltige Schwefelsäure aufgearbeitet wird.

6. Verfahren nach einem oder mehreren der
Ansprüche 1 bis 5, dadurch gekennzeichnet, daß
die Brennkammertemperatur über 700 °C liegt.

Claims

1. Process for working up waste acids which
have organic constituents and contain inorganic
salts at a concentration up to the flow limit by
combustion or cracking in the presence of an
oxygen-containing gas, characterised in that the
waste acids are finely sprayed into a combustion
chamber having cooled walls and are evaporated
in direct contact with combustion gas so that at
least part of the salts form a stationary dynamic
layer on the cooled walls of the combustion
chamber, part of this layer being removed in the
molten state at the base of the combustion
chamber, and the gases are subsequently purified
and washed.

2. Process according to Claim 1, characterised
in that the burnt gases produced during the
combustion are introduced into a heat exchanger
or waste heat boiler and the sensible heat is

converted into steam which is used for concentrating the waste acids and/or wash acids to be worked up.

3. Process according to Claim 1 or 2, characterised in that acids containing alkali metal and/or alkaline earth metal are worked up.

4. Process according to one or more of Claims 1 to 3, characterised in that contaminated hydrochloric and/or sulphuric acid are worked up to pure acid.

5. Process according to one or more of Claims 1 to 4, characterised in that sulphuric acid containing boron is worked up.

6. Process according to one or more of Claims 1 to 5, characterised in that the temperature in the combustion chamber is above 700 °C.

## Revendications

1. Procédé pour traiter des acides résiduaires contenant des constituants organiques et qui contiennent également des sels minéraux à une concentration pouvant aller jusqu'à la limite d'écoulement, par combustion ou craquage en présence d'un gaz contenant de l'oxygène, caractérisé en ce que les acides résiduaires sont introduits en pulvérisation fine dans une chambre de combustion à parois refroidies et vaporisés en contact direct avec des gaz de combustion dans des conditions telles qu'une partie au moins des sels forme sur les parois refroidies de la chambre de combustion une couche stationnaire dynamique qui est évacuée en partie à l'état fondu au pied de la chambre de combustion, et les gaz sont ensuite épurés et lavés.

2. Procédé selon la revendication 1, caractérisé en ce que les gaz de fumée formés à la combustion sont envoyés dans un échangeur de chaleur ou une chaudière à récupération de chaleur et leur chaleur sensible convertie en vapeur qui est utilisée pour concentrer les acides résiduaires et/ou acides de lavage à traiter.

3. Procédé selon la revendication 1 ou 2, caractérisé en ce que l'on traite des acides contenant des métaux alcalins et/ou alcalino-terreux.

4. Procédé selon une ou plusieurs des revendications 1 à 3, caractérisé en ce que l'on transforme de l'acide chlorhydrique et/ou sulfurique impur en acide pur.

5. Procédé selon une ou plusieurs des revendications 1 à 4, caractérisé en ce que l'on traite un acide sulfurique contenant du bore.

6. Procédé selon une ou plusieurs des revendications 1 à 5, caractérisé en ce que la température de la chambre de combustion est supérieure à 700 °C.